# EUROPEAN PATENT APPLICATION

(11) **EP 4 607 483 A1**
(43) Date of publication of application: **27.08.2025**
(21) Application number: 22962706.2
(22) Date of filing: 18.10.2022
(51) Int. Cl.: G07C 9/37, G06F 21/32

(54) **DISPLAY CONTROL DEVICE, DISPLAY CONTROL METHOD, AND RECORDING MEDIUM**

(71) Applicant: NEC Corporation, 108-8001 Tokyo (JP)
(72) Inventor: MORISHITA, Yusuke, Tokyo 108-8001 (JP)
(74) Representative: Betten & Resch
(86) International application number: PCT/JP2022/038812
(87) International publication number: WO 2024/084594

(57) **Abstract**

A display control apparatus includes: an image acquisition unit that acquires an image including a predetermined area through which a person passes toward a face authentication gate apparatus passes; and a display control unit that displays a result of face authentication performed by using the acquired image, before the person reaches the face authentication gate apparatus. The display control unit changes a display aspect, based on the result of the face authentication.

## Description

### Technical Field

The present disclosure relates to technical fields of a display control apparatus, a display control method, and a recording medium.

### Background Art

For example, there is proposed an apparatus that performs face authentication on passengers who have completed immigration procedures at an airport, and that performs guide display when it is determined that a passenger needs to undergo quarantine inspection based on aircraft seat information and health information associated with a person identified by the face authentication (see Patent Literature 1). In addition, Patent Literature 2 to 4 are cited as prior art documents related to this disclosure.

### Citation List

### Patent Literature

Patent Literature 1: WO2022/074847A1
Patent Literature 2: WO2022/044086A1
Patent Literature 3: WO2022/003853A1
Patent Literature 4: JP2021-163457A

### Summary

### Technical Problem

It is an example object of the present disclosure to provide a display control apparatus, a display control method, and a recording medium that aim to improve the techniques/technologies described in Citation List.

### Solution to Problem

A display control apparatus according to an example aspect includes: an image acquisition unit that acquires an image including a predetermined area through which a person passes toward a face authentication gate apparatus passes; and a display control unit that displays a result of face authentication performed by using the acquired image, before the person reaches the face authentication gate apparatus, wherein the display control unit changes a display aspect, based on the result of the face authentication.

A display control method according to an example aspect includes: acquiring an image including a predetermined area through which a person passes toward a face authentication gate apparatus passes; displaying a result of face authentication performed by using the acquired image, before the person reaches the face authentication gate apparatus; and changing a display aspect, based on the result of the face authentication.

A recording medium according to an example aspect is a recording medium on which a computer program that allows a computer to execute a display control method is recorded, the display control method including: acquiring an image including a predetermined area through which a person passes toward a face authentication gate apparatus passes; displaying a result of face authentication performed by using the acquired image, before the person reaches the face authentication gate apparatus; and changing a display aspect, based on the result of the face authentication.

### Brief Description of Drawings

[FIG. 1] FIG. 1 is a block diagram illustrating an example of a configuration of a display control apparatus.
[FIG. 2] FIG. 2 is a block diagram illustrating an example of a configuration of an airport system.
[FIG. 3] FIG. 3 is a plan view illustrating an example of a floor on which a boarding gate is provided at an airport.
[FIG. 4] FIG. 4 is a plan view illustrating an example of a virtual authentication area.
[FIG. 5] FIG. 5 is a block diagram illustrating another example of the configuration of the display control apparatus.
[FIG. 6] FIG. 6 is a diagram illustrating an example of a face database provided in the display control apparatus.
[FIG. 7] FIG. 7 is a diagram for describing passenger tracking processing.
[FIG. 8] FIG. 8 is a diagram illustrating an example of an ID correspondence table.
[FIG. 9] FIG. 9 is a diagram illustrating an example of an image.
[FIG. 10] FIG. 10 is a flowchart illustrating a tracking and authentication operation according to a second example embodiment.
[FIG. 11] FIG. 11 is a diagram illustrating an example of a display apparatus.
[FIG. 12] FIG. 12 is a flowchart illustrating a display control operation according to the second example embodiment.
[FIG. 13] FIG. 13 is a block diagram illustrating an example of a configuration of an authentication apparatus.
[FIG. 14] FIG. 14 is a diagram illustrating another example of the display apparatus.
[FIG. 15] FIG. 15 is a block diagram illustrating an example of a configuration of a terminal apparatus.
[FIG. 16] FIG. 16 is a plan view illustrating another example of the virtual authentication area.

### Description of Example Embodiments

A display control apparatus, a display control method, and a recording medium according to example embodiments will be described.

### <First Example Embodiment>

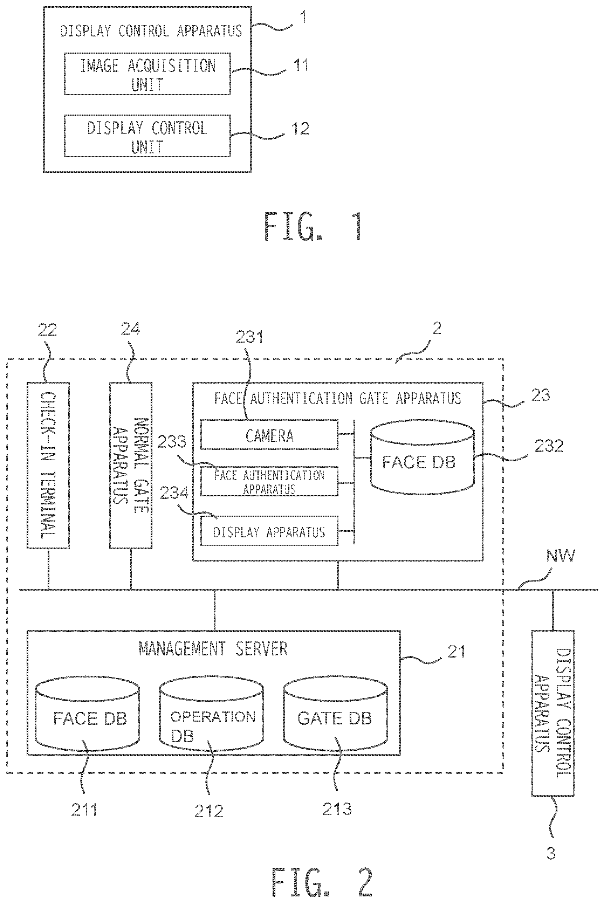

A display control apparatus, a display control method, and a recording medium according to a first example embodiment will be described with reference to FIG. 1. The following describes the display control apparatus, the display control method, and the recording medium according to the first example embodiment, by using a display control apparatus 1. In FIG. 1, the display control apparatus 1 includes an image acquisition unit 11 and a display control unit 12. The image acquisition unit 11 acquires an image including a predetermined area through which a person passes toward a face authentication gate apparatus (in other words, an image in which the predetermined area is captured).

The face authentication gate apparatus permits a person having succeeded in face authentication to pass through, but does not permit a person having failed in the face authentication to pass through. The face authentication gate apparatus may determine that the face authentication is successful, when a face of a person attempting to pass through the face authentication gate apparatus corresponds to a face indicated by a face image registered in advance. In other words, the face authentication gate apparatus may determine that the face authentication is successful, when there is a person corresponding to the person attempting to pass through the face authentication gate apparatus, among those having pre-registered face images.

Therefore, in a case where the face image of the person attempting to pass through the face authentication gate apparatus is not registered, the face authentication gate apparatus does not permit the person to pass through (e.g., in a case where the face authentication gate apparatus is a flap-type gate apparatus, a flap is in a closed state). Therefore, when a person having no registered face image attempts to enter the face authentication gate apparatus, a flow of people passing through the face authentication gate apparatus is blocked due to the person not being permitted to pass through. That is, a throughput of the face authentication gate apparatus is reduced.

The display control unit 12 displays a result of the face authentication performed by using the image acquired by the image acquisition apparatus 11, before the person attempting to pass through the face authentication apparatus reaches the face authentication apparatus. At this time, the display control unit 12 changes a display aspect, based on the result of the face authentication. The display aspect may include a display appearance and a display state. Changing the display aspect may mean changing at least one of the display appearance and the display state. That is, changing the display aspect may include changing the display appearance, changing the display state, and changing both the display appearance and the display state.

The display appearance may be represented by at least one of a character string (e.g., messages), a figure, a color, and a pattern. The display state may include at least one of lighting on, lighting off, flashing/blinking, and brightness. Changing the display appearance may mean changing at least one of the character string, the figure, the color, and the pattern. Changing the display state may include: switching between display lighting on, lighting off, or blinking; and changing display brightness. The switching between display lighting on, lighting off, or blinking, may be achieved by changing the display brightness. Changing the display aspect based on the result of the face authentication may mean differentiating a display aspect of one face authentication result from a display aspect for another face authentication result.

The result of the face authentication may include, for example, a result indicating that a person is permitted to pass through the face authentication gate apparatus, and a result indicating that a person is not permitted to pass through the face authentication gate apparatus. The display control unit 12 may differentiate a display aspect when the result of the face authentication indicates that the person is permitted to pass through the face authentication gate apparatus, from a display aspect when the result of the face authentication indicates that the person is not permitted to pass through the face authentication gate apparatus.

**In** a case where the result of the face authentication is displayed in the display aspect based on the result of the face authentication, the person himself, who is attempting to pass through the face authentication gate apparatus, can relatively easily determine whether or not to be permitted to pass through the face authentication gate apparatus. In addition, at least one of a guide and a security guard near the face authentication gate apparatus can relatively easily determine the person not being permitted to pass through the face authentication gate apparatus.

In a case where the person himself, who is attempting to pass through the face authentication gate apparatus, determines to be not permitted to pass through the face authentication gate apparatus, it is possible to prevent/control the person from entering the face authentication gate apparatus. In addition, in a case where at least one of the guide and the security guard can identify the person not being permitted to pass through the face authentication gate apparatus, it is possible to guide the person not being permitted to pass through the face authentication gate apparatus so as not to enter the face authentication gate apparatus. Therefore, according to the display control apparatus 1, it is possible to prevent/control the person not being permitted to pass through the face authentication gate apparatus from entering the face authentication gate apparatus. Therefore, according to the display control apparatus 1, it is possible to prevent/control the reduction in a throughput of the face authentication gate apparatus.

In the display control apparatus 1, the image acquisition unit 11 may acquire the image including the predetermined area through which a plurality of persons pass toward the face authentication gate apparatus. The display control unit 12 may display the result of the face authentication performed by using the image acquired by the image acquisition unit 11, before the person reaches the face authentication gate apparatus. The display control unit 12 may change the display aspect, based on the result of the face authentication.

Such a display control apparatus 1 may be realized, for example, by a computer reading a computer program recorded on a recording medium. In this case, it can be said that on a recording medium, a computer program that allows a computer to execute a display control method is recorded, the display control method including: acquiring an image including a predetermined area through which a person passes toward a face authentication gate apparatus passes; displaying a result of face authentication performed by using the acquired image, before the person reaches the face authentication gate apparatus; and changing a display aspect, based on the result of the face authentication.

### <Second Example Embodiment>

A display control apparatus, a display control method, and a recording medium according to a second example embodiment will be described with reference to FIG. 2 to FIG. 13. The following describes the display control apparatus, the display control method, and the recording medium according to the second example embodiment, by using a display control apparatus 3 used at an airport.

First, an airport system 2 at the airport will be described with reference to FIG. 2. In FIG. 2, the airport system 2 includes a management server 21, a check-in terminal 22, and a plurality of gate apparatuses disposed at a boarding gate. The management server 21, the check-in terminal 22, and the plurality of gate apparatuses are connected to each other via a network NW.

The airport system 2 may include another check-in terminal, in addition to the check-in terminal 22. That is, the airport system 2 may include a plurality of check-in terminals. The network NW may be a wide area network (WAN) such as the Internet, or may be a local area network (LAN).

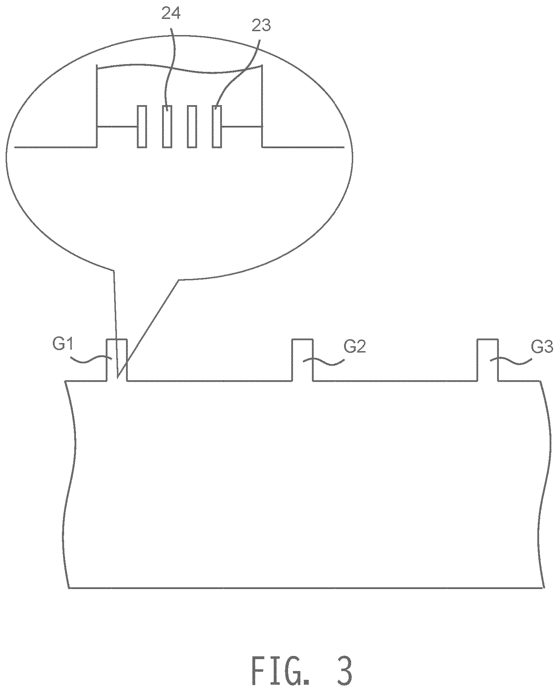

The plurality of gate apparatuses include a face authentication gate apparatus 23 that has a face authentication function of performing face authentication processing and that determines whether or not to permit a passenger to pass through depending on a result of the face authentication processing, and a gate apparatus 24 that determines whether or not to permit a passenger to pass through based on an airline ticket/boarding pass carried by the passenger. The gate apparatus 24 will be hereinafter referred to as a "normal gate apparatus 24" as appropriate. As illustrated in FIG. 3, let us assume that there are boarding gates G1, G2 and G3 at the airport. The face authentication gate apparatus 23 and the normal gate apparatus 24 are assumed to be disposed at the boarding gate G1.

The "airline ticket" may mean at least one of a paper airline ticket and an electronic airline ticket. The "airline ticket" may conceptually include, in addition to or in place of at least one of the paper airline ticket and the electronic airline ticket, those indicating personal information associated with the electronic airline ticket (e.g., a passport, a credit card used to purchase the airline ticket, etc.).

The management server 21 includes a face database 211 (hereinafter referred to as a "face DB 211"), an operation database 212 (hereinafter referred to as an "operation DB 212"), and a gate database 213 (hereinafter referred to as a "gate DB 213").

In the face DB 211, a face image used for the face authentication processing is registered. In addition to or in place of the face image, a feature quantity relating to the face image may be registered in the face DB 211. In the operation DB 212, operation information (so-called flight information) about aircrafts is registered. The operation information may include a flight number of an aircraft, gate identification information for identifying the boarding gate (e.g., a boarding gate number), and a boarding start time. The flight number of the aircraft, the identification information, and the boarding start time may be associated with one another.

In the gate DB 213, a plurality of pieces of boarding gate information respectively corresponding to a plurality of boarding gates are registered. It should be noted that a party performing at least one of management and operation of the airport system 2 may be different from an airport company(s) performing the management and operation of the airport and from an airline company(s) performing the operation of aircrafts. In this case, the plurality of pieces of boarding gate information registered in the gate DB 213 may be acquired from a system(s) associated with at least one of the airport company(s) and the airline company(s). The gate DB 213 may be shared by the airport system 2 and by the system(s) associated with at least one of the airport company(s) and the airline company(s).

The boarding gate information may include gate identification information for identifying the boarding gate (e.g., a boarding gate number), and apparatus information about the disposed gate apparatuses. The apparatus information may be information indicating at least one of the number of the gate apparatuses, and a type, an operating status, and a disposed position of each gate apparatus. Here, the type of the gate apparatus may include a first type in which the face authentication is possible, and a second type in which the face authentication is not possible. The gate apparatus of the second type may include a gate apparatus configured to read those (e.g., a two-dimensional bar code, etc.) indicating information for identifying a passenger (e.g., an ID). The operating status of the gate apparatus may include an active state in which the gate apparatus is in operation and an inactive state in which the gate apparatus is paused/inactive (i.e., not in operation). The disposed position of the gate apparatus may be expressed as a relative positional relation of two or more gate apparatuses in a case where the two or more gate apparatuses are disposed at one boarding gate, for example. Alternatively, the disposed position of the gate apparatus may be expressed as coordinates of each gate apparatus in a coordinate system of a floor on which the boarding gate is provided at the airport (a so-called departure floor), for example. In a case where only one gate apparatus is disposed at one boarding gate, the apparatus information may not include the disposed position of the gate apparatus. The inactive state may include a state in which no electric power is supplied to the gate apparatus (e.g., a power OFF state), and a state in which the gate apparatus is not allowed to perform its function even though electric power is supplied to a part of the gate apparatus (a so-called standby state). The plurality of pieces of boarding gate information registered in the gate DB 213 may be determined in advance depending on at least one of flights of aircrafts and airline companies. The plurality of pieces of boarding gate information registered in the gate DB 213 may be automatically updated in response to departure times of aircrafts or the like.

The check-in terminal 22 is a terminal used for a boarding procedure (i.e., check-in). The check-in terminal 22 may be operated by an airport staff or by a passenger (i.e., the check-in terminal 22 may be a so-called self-service check-in machine). The "airport staff" is not limited to those belonging to the airport company(s) that manages and operates the airport, but conceptually includes those working at the airport, such as those belonging to the airline company(s) that operates aircrafts.

The check-in terminal 22 performs the boarding procedure of a passenger, based on the airline ticket carried by the passenger. The check-in terminal 22 may acquire the face image of the passenger during the boarding procedure. The check-in terminal 22 may acquire the face image of the passenger by capturing an image of the passenger with a camera, or may acquire the face image of the passenger by reading a photograph of the face printed in a passport carried by the passenger. The check-in terminal 22 may not acquire the face images of all the passengers.

The check-in terminal 22 transmits, to the management server 21, passenger information about a passenger performing the boarding procedure (e.g., the passenger's name and the flight number of the aircraft) and the face image of the passenger. The check-in terminal 22 may acquire the passenger information from information described in the airline ticket (in other words, information associated with the airline ticket).

The management server 21 associates the passenger information and the face image transmitted from the check-in terminal 22, with each other, and registers them in the face DB 211. At this time, the management server 21 may add passenger identification information for identifying the passenger, to the passenger information and the face image. As described later, the face image is used for the face authentication processing. Therefore, the passenger identification information added to the passenger information and the face image will be hereafter referred to as an "authentication ID" as appropriate. The face image of the passenger may be acquired by an application (e.g., an application provided by an airline company) disposed in a terminal apparatus (e.g., a smartphone) carried by the passenger, or may be acquired by a gate apparatus disposed in an immigration area of the airport, in addition to or in place of the check-in terminal 22.

The management server 21 may identify the flight number of the aircraft, a first predetermined time (e.g., several minutes to tens of minutes) before the boarding start time, from the operation information registered in the operation DB 212, based on a current time. The management server 21 may extract the boarding gate information corresponding to the gate identification information, from the plurality of pieces of boarding gate information registered in the gate DB 213, based on the gate identification information associated with the identified flight number. The management server 21 may determine whether or not the face authentication gate apparatus (e.g., the face authentication gate apparatus 23) is disposed at the boarding gate corresponding to the extracted boarding gate information, based on the extracted boarding gate information.

When it is determined that the face authentication gate apparatus (e.g., the face authentication gate apparatus 23) is disposed, the management server 21 may extract, from the face DB 211, the face image of the passenger associated with the passenger information including the identified flight number (in other words, scheduled to board the aircraft with the identified flight number). The management server 21 may transmit the extracted face image to the face authentication gate apparatus (e.g., the face authentication gate apparatus 23) identified by the extracted boarding gate information. When it is determined that the face authentication gate apparatus is not disposed, the management server 21 may not perform the processing. When it is determined that the face authentication gate apparatus is disposed, the management server 21 may determine whether or not the disposed face authentication gate apparatus is in operation, based on the extracted boarding gate information. In a case where the feature quantity relating to the face image is registered in the face DB 211, the management server 21 may transmit the feature quantity relating to the face image to the face authentication gate apparatus, in addition to or in place of the face image.

The face authentication gate apparatus 23 includes a camera 231, a face database 232 (hereinafter referred to as a "face DB 232"), and a face authentication apparatus 233. The face image transmitted from the management server 21 is registered in the face DB 232. The face authentication gate apparatus 23 may include a display apparatus 234. The display apparatus 234 may display thereon at least one of an image captured by the camera 231 and information indicating the result of the face authentication processing.

The face authentication apparatus 233 performs the face authentication processing, by using the image captured by the camera 231 (e.g., the image in which a face of the passenger is captured) and the face image registered in the face DB 232. In a case where the face authentication is successful, the face authentication gate apparatus 23 permits the passenger to pass through. On the other hand, in a case where the face authentication is failed, the face authentication gate apparatus 23 does not permit the passenger to pass through. Various existing aspects (e.g., at least one of a two-dimensional (2D) authentication method and a three-dimensional (3D) authentication method) are applicable to the face authentication processing.

A specific example of the face authentication processing in the face authentication gate apparatus 23 will be described. The face authentication gate apparatus 23 may be a flap-type gate apparatus. The face authentication apparatus 233 may extract the feature quantity of the image captured by the camera 231. The face authentication apparatus 233 may collate/verify the extracted feature quantity with the feature quantity relating to the face image registered in the face DB 232. At this time, the face authentication apparatus 233 may calculate a matching score (or a similar score), based on the extracted feature quantity and the feature quantity relating to the face image registered in the face DB 232. When the matching score is greater than or equal to a threshold (i.e., when the face authentication is successful), the face authentication apparatus 233 may permit the passenger to pass through. At this time, the face authentication apparatus 233 may identify the authentication ID relating to the passenger. In this case, the face authentication gate apparatus 23 may open a flap. When the matching score is less than the threshold (i.e., when the face authentication is failed), the face authentication apparatus 233 may not permit the passenger to pass through. In this case, the face authentication gate apparatus 23 may close the flap. In addition to or in place of the face image, the feature quantity relating to the face image may be registered in the face DB 232.

Another apparatus (e.g., the management server 21) that differs from the face authentication gate apparatus 23 may perform a part of the face authentication processing. In this case, the face authentication apparatus 233 of the face authentication gate apparatus 23 may extract the feature quantity of the image captured by the camera 231. The face authentication apparatus 233 may transmit the extracted feature quantity to the other apparatus. The other apparatus may collate/verify the feature quantity transmitted from the face authentication apparatus 233 with the feature quantity relating to the face image registered in a face database (e.g., the face DB 211). The other apparatus may transmit information indicating a verification result (e.g., information indicating whether or not the matching score is greater than or equal to the threshold) to the face authentication gate apparatus 23. When the matching score is greater than or equal to the threshold, the other apparatus may include the authentication ID relating to the passenger, in the information indicating the verification result. In a case where the information indicating the verification result indicates that the matching score is greater than or equal to the threshold, the face authentication apparatus 233 may permit the passenger to pass through. In a case where the information indicating the verification result indicates that the matching score is less than the threshold, the face authentication apparatus 233 may not permit the passenger to pass through.

In the face authentication gate apparatus 23, a passing speed of the passenger is expectedly higher than that in the normal gate apparatus 24. In other words, the number of passengers passing through the face authentication gate apparatus 23 in a predetermined time period is expectedly greater than the number of passengers passing through the normal gate apparatus 24. That is, the face authentication gate apparatus 23 is capable of improving the throughput at the boarding gate.

As described above, however, a passenger being permitted to pass through the face authentication gate apparatus 23 is only a passenger having succeeded in the face authentication. In order for one passenger to succeed in the face authentication in the face authentication gate apparatus 23, the face image of the one passenger needs to be registered in the face DB 232 of the face authentication gate apparatus 23. If a passenger having no face image registered in the face DB 232 enters the face authentication gate apparatus 23, the throughput at the boarding gate is reduced due to the passenger not being permitted to pass through.

In view of the above problem, the display control apparatus 3 determines whether or not the passenger is permitted to pass through the face authentication gate apparatus 23, before the passenger enters the face authentication gate apparatus 23. That is, the display control apparatus 3 determines whether or not the passenger is permitted to pass through the face authentication gate apparatus 23, independently of/separately from the face authentication gate apparatus 23.

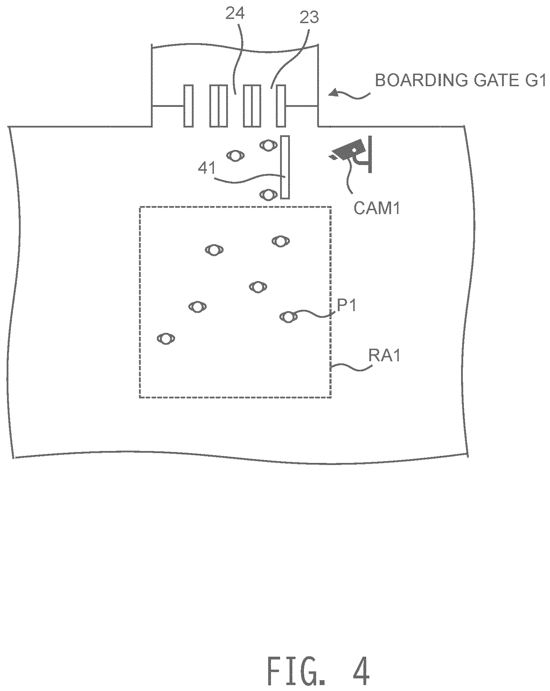

As illustrated in FIG. 4, a virtual authentication area RA1 is provided around the boarding gate G1 in which the face authentication gate apparatus 23 and the normal gate apparatus 24 are disposed. The authentication area RA1 is an area through which a plurality of passengers pass toward one of the face authentication gate apparatus 23 and the normal gate apparatus 24. The authentication area RA1 corresponds to an example of the "predetermined area" in the first example embodiment described above.

A camera CAM1 is disposed so as to image/capture the authentication area RA1. The camera CAM1 may be connected to the display control apparatus 3 via the network NW. The camera CAM1 may not be disposed to include all of the authentication area RA1 in its angle of view. In other words, the camera CAM1 may be disposed to image/capture at least a part of the authentication area RA1. The camera CAM1 may be disposed at a position that does not interfere with the passage of passengers (e.g., at a position that is higher than the passengers' heads). As described later, an image captured by the camera CAM1 may be used for the face authentication processing. Therefore, the camera CAM1 may be a high-resolution camera, such as a 4K resolution camera. The camera CAM1 may not be connected to the display control apparatus 3 via the network NW. In this instance, the camera CAM1 may be connected to the display control apparatus 3 via a cable (e.g., a USB (Universal Serial Bus) cable).

The camera CAM1 may generate a first image that is an image including the authentication area RA1, by imaging the authentication area RA1. The first image may be an image corresponding to one frame of a video.

The display control apparatus 3 performs the face authentication processing by using the first image generated by the camera CAM1 imaging the authentication area RA1, and determines, before a passenger included in the first image enters the face authentication gate apparatus 23, whether or not the passenger is permitted to pass through the face authentication gate apparatus 23. Hereinafter, the display control apparatus 3 will be specifically described.

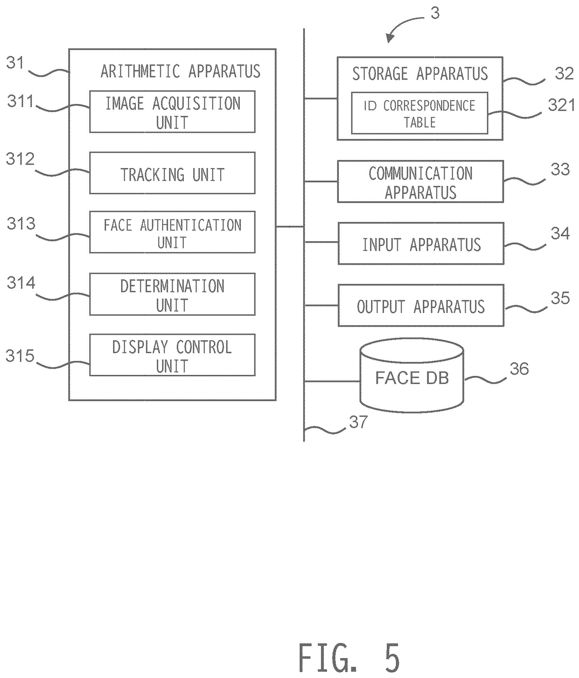

As illustrated in FIG. 5, the display control apparatus 3 includes an arithmetic apparatus 31, a storage apparatus 32, and a communication apparatus 33. The display control apparatus 3 may include an input apparatus 34 and an output apparatus 35. The display control apparatus 3 may include a face database 36 (hereinafter referred to as a "face DB36"). The display control apparatus 3 may not include at least one of the input apparatus 34 and the output apparatus 35. In the display control apparatus 3, the arithmetic apparatus 31, the storage apparatus 32, the communication apparatus 33, the input apparatus 34, the output apparatus 35, and the face DB36 may be connected via a data bus 37. The display control apparatus 3 is connected to the management server 21 via the communication apparatus 33 and the network NW. The display control apparatus 3 may constitute a part of the airport system 2. In other words, the airport system 2 may include the display control apparatus 3.

The arithmetic apparatus 31 may include, for example, at least one of a CPU (central processing unit), a GPU (graphics processing unit), an FPGA (field programmable gate array), a TPU (Tensor Processing Unit), and a quantum processor.

The storage apparatus 32 may include, for example, at least one of a random access memory (RAM), a read-only memory (ROM), a hard disk apparatus, a magneto-optical disk apparatus, a solid state drive (SSD), and an optical disk array. That is, the storage apparatus 32 may include non-transitory recording media. The storage apparatus 32 is configured to store desired data. For example, the storage apparatus 32 may temporarily store a computer program to be executed by the arithmetic apparatus 31. The storage apparatus 32 may temporarily store data that are temporarily used by the arithmetic apparatus 31 when the arithmetic apparatus 31 executes the computer program.

The communication apparatus 33 is configured to communicate with the management server 21 via the network NW. The communication apparatus 33 may be configured to communicate with an apparatus external to the display control apparatus 3, other than the management server 21, via the network NW. The communication apparatus 33 may perform wired communication or may perform wireless communication.

The input apparatus 34 is an apparatus that is configured to receive an input of information to the display control apparatus 3 from the outside. It may include an operating apparatus (e.g., a keyboard, a mouse, a touch panel, etc.) that is operable by an operator of the display control apparatus 3. The input apparatus 34 may include a recording medium reading apparatus that is configured to read information recorded on a recording medium that is detachable from the display control apparatus 3, such as, for example, a USB memory. When information is inputted to the display control apparatus 3 via the communication apparatus 33 (in other words, when the display control apparatus 2 acquires information via the communication apparatus 33), the communication apparatus 33 may function as an input apparatus.

The output apparatus 35 is an apparatus that is configured to output information to the outside of the display control apparatus 3. The output apparatus 35 may output, as the above information, visual information such as characters and images, may output auditory information such as sound/audio, or may output tactile information such as vibrations. The output apparatus 35 may include, for example, at least one of a display, a speaker, a printer, and a vibrating motor. The output apparatus 35 may be configured to output information to a recording medium that is detachable from the display control apparatus 3, such as, for example, a USB memory. When the display control apparatus 3 outputs the information via the communication apparatus 33, the communication apparatus 33 may function as an output apparatus.

The arithmetic apparatus 31 may include an image acquisition unit 311, a tracking unit 312, a face authentication unit 313, a determination unit 314, and a display control unit 315, as logically realized function blocks, or as physically realized processing circuits. In addition, at least one of the image acquisition unit 311, the tracking unit 312, the face authentication unit 313, the determination unit 314, and the display control unit 315 may be realized in a form in which a logical functional block and a physical processing circuit (i.e., hardware) are mixed. In a case where at least a part of the image acquisition unit 311, the tracking unit 312, the face authentication unit 313, the determination unit 314, and the display control unit 315 is a functional block, at least a part of the image acquisition unit 311, the tracking unit 312, the face authentication unit 313, the determination unit 314, and the display control unit 315 may be realized by the arithmetic apparatus 31 executing a predetermined computer program.

The arithmetic apparatus 31 may acquire (in other words, may read) the predetermined computer program from the storage apparatus 32. The arithmetic apparatus 31 may read the predetermined computer program stored on a computer-readable, non-transitory recording medium, by using a not-illustrated recording medium reading apparatus provided in the display control apparatus 3. The arithmetic apparatus 31 may acquire (in other words, may downloaded or read) the predetermined computer program from a not-illustrated apparatus external to the display control apparatus 3 via the communication apparatus 33. As the recording medium that records thereon the predetermined computer program to be executed by the arithmetic apparatus 31, at least one of an optical disk, a magnetic medium, a magneto-optical disk, a semiconductor memory, and other media configured to store programs may be used.

The management server 21 transmits at least a part of the face image registered in the face DB 211 to the display control apparatus 3, together with the authentication ID (i.e., the passenger identification information) added to the face image. In this instance, in addition to the face image, the management server 21 may transmit the gate identification information and the boarding start time to the display control apparatus 3. The management server 21 may identify the gate identification information and the boarding start time, based on the flight number of the aircraft included in the passenger information associated with the face image registered in the face DB 211 and based on the operation information registered in the operation DB 212. That is, the management server 21 may identify the gate identification information and the boarding start time, relating to the aircraft that the passenger indicated by the face image goes aboard. In a case where the feature quantity relating to the face image is registered in the face DB 211 in place of or in addition to the face image, the management server 21 may transmit the feature quantity relating to the face image to the display control apparatus 3 in place of or in addition to the face image.

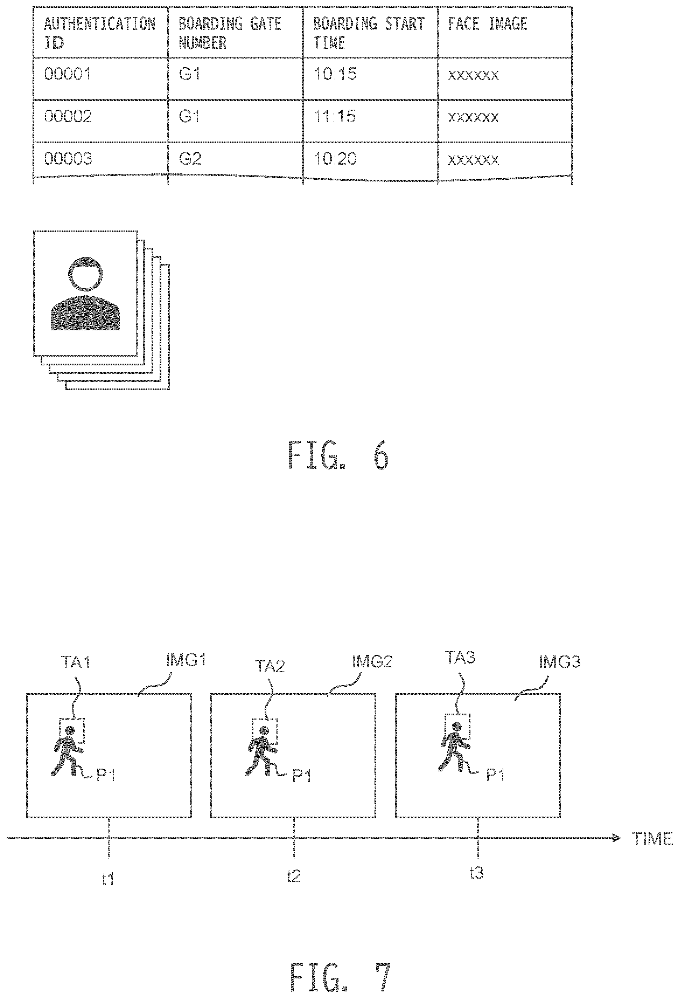

The display control apparatus 3 registers, in the face DB36, the face image transmitted from the management server 21. In addition to the face image, the display control apparatus 3 may register, in the face DB36, the gate identification information and the boarding start time. As illustrated in FIG. 6, the face DB36 may include (i) a plurality of face images, and (ii) a table that associates the authentication ID, the gate identification information (e.g., a boarding gate number), the boarding start time, and the face image with one another. The management server 21 may transmit at least a part of the face image registered in the face DB 211 to the display control apparatus 3 in a predetermined cycle. The display control apparatus 3 may update the face image registered in the face DB36 at each time when the face image is transmitted from the management server 21. In a case where the management server 21 transmits the feature quantity relating to the face image to the display control apparatus 3 in place of or in addition to the face image, the feature quantity relating to the face image may be registered in the face DB36 in place of or in addition to the face image.

The image acquisition unit 311 of the arithmetic apparatus 31 may acquire one or more first images generated by the camera CAM1 via the communication apparatus 33. The image acquisition unit 311 may store the acquired one or more first images in the storage apparatus 32.

The tracking unit 312 of the arithmetic apparatus 31 tracks one or more passengers passing through the authentication area RA1, by using a plurality of first images acquired by the image acquisition unit 311 (i.e., a plurality of first images generated by the camera CAM1). The face authentication unit 313 of the arithmetic apparatus 31 performs the face authentication processing on one or passengers passing through the authentication area RA1, by using the plurality of first images acquired by the image acquisition unit 311.

With reference to FIG. 7, a case where the tracking unit 312 performs tracking processing of tracking a passenger P1 passing through the authentication area RA1 illustrated in FIG. 4 and the face authentication unit 313 performs the face authentication processing on the passenger P1, will be described. Since the passenger P1 is also a target person of the face authentication processing, it may be referred to as an authentication subject.

Images IMG1, IMG2 and IMG3 illustrated in FIG. 7 are images including the passenger P1 (in other words, images in which the passenger P1 is captured). The image IMG1 is an image generated by the camera CAM1 imaging the authentication area RA1 at a time t1. The image IMG2 is an image generated by the camera CAM1 imaging the authentication area RA1 at a time t2 that is after the time t1. The image IMG3 is an image generated by the camera CAM1 imaging the authentication area RA1 at a time t3 that is after the time t2.

Each of the images IMG1, IMG2 and IMG3 may be an image corresponding to one frame of a video. In such a case, the image IMG2 may not be an image corresponding to a frame immediately after a frame corresponding to the image IMG1. That is, the image IMG2 may be an image corresponding to a frame existing two or more frames after the frame corresponding to the image IMG1. Similarly, the image IMG3 may not be an image corresponding to a frame immediately after a frame corresponding to the image IMG2. That is, the image IMG3 may be an image corresponding to a frame existing two or more frames after the frame corresponding to the image IMG2.

The tracking unit 312 detects, from the image IMG1, a head of the passenger P1 included in the image IMG1. Since existing techniques/technologies are applicable to a method of detecting the human head from the image, a detailed description of the method will be omitted. The tracking unit 312 sets an area including the head of the passenger P1 as a tracking area TA1, based on the detected head of the passenger P1.

When setting the tracking area TA1, the tracking unit 312 sets, for the passenger P1, a tracking ID that is identification information for identifying the passenger P1 relating to the tracking area TA1. The tracking unit 312 calculates a position of the passenger P1, based on the tracking area TA1. Since existing techniques/technologies are applicable to a method of calculating, from the image, the position of a subject included in the image, a detailed description of the method will be omitted. The tracking unit 312 may associate the tracking ID and the position of the passenger P1 with each other, and may register them in an ID correspondence table 321 stored in the storage apparatus 32.

When setting the tracking area TA1, the tracking unit 312 may determine whether or not the face of the passenger P1 is captured in the tracking area TA1. In other words, the tracking unit 312 may perform face detection for the tracking area TA1. When it is determined that the face of the passenger P1 is captured in the tracking area TA1, the tracking unit 312 generates a face image including a face area of the passenger P1. The tracking unit 312 transmits, to the face authentication unit 313, the generated face image in association with the tracking ID relating to the passenger P1. When it is determined that the face of the passenger P1 is not captured in the tracking area TA1, the tracking unit 312 may not generate the face image.

The face authentication unit 313 performs the face authentication processing, by using the face image transmitted from the tracking unit 312 and the face image registered in the face DB36. The face authentication unit 313 may extract the feature quantity of the face image transmitted from the tracking unit 312. The face authentication unit 313 may collate/verify the feature quantity of the face image transmitted from the tracking unit 312 with the feature quantity relating to the face image registered in the face DB36. At this time, the face authentication unit 313 may calculate a matching score (or a similarity score), based on the extracted feature quantity and the feature quantity relating to the face image registered in the face DB36. The face authentication unit 313 may compare the matching score with a threshold. When the matching score is greater than or equal to the threshold, the face authentication unit 313 may determine that the face indicated by the face image transmitted from the tracking unit 312 corresponds to the face indicated by one of the face images registered in the face DB36. When the matching score is less than the threshold, the face authentication unit 313 may determine that the face image indicating the face corresponding to the face indicated by the face image transmitted from the tracking unit 312 is not registered in the face DB36.

When the face indicated by the face image transmitted from the tracking unit 312 corresponds to the face indicated by one of the face images registered in the face DB36 (in other words, when the face authentication is successful), the face authentication unit 313 associates the authentication ID corresponding to one face image, with the tracking ID corresponding to the face image transmitted from the tracking unit 312, and registers it in the ID correspondence table 321. The face authentication unit 313 may register, in the ID correspondence table 321, an authentication time that is a time at which the face authentication processing is performed, in addition to the authentication ID.

When the face image indicating the face corresponding to the face indicated by the face image transmitted from the tracking unit 312 is not registered in the face DB36 (in other words, when the face authentication is failed), the face authentication unit 313 may associate information indicating that there is no applicable person (e.g., "N/A (Not Applicable)"), with the tracking ID corresponding to the face image transmitted from the tracking unit 312, and may register it in the ID correspondence table 321.

The tracking unit 312 may identify the passenger P1 included in the image IMG2, by using the image IMG2 and the image IMG1. Identifying the passenger P1 included in the image IMG2 is synonymous with associating the passenger P1 included in the image IMG1 with the passenger P1 included in the image IMG2. Therefore, at least one of a matching method and an optical flow method relating to the association between the images, is applicable to the identification of the passenger P1 included in the image IMG2. Since various existing aspects are applicable to each of the matching method and the optical flow method, a detailed description of the methods will be omitted.

When the passenger P1 included in the image IMG2 is identified, the tracking unit 312 detects the head of the passenger P1. The tracking unit 312 sets the area including the head of the passenger P1, as a tracking area TA2, based on the detected head of the passenger P1. Since the passenger P1 included in the image IMG1 and the passenger P1 included in the image IMG2 are the same passenger, the tracking ID of the passenger P1 relating to the tracking area TA2 is the same as the tracking ID of the passenger P1 relating to the tracking area TA1. The tracking unit 312 calculates the position of the passenger P1, based on the tracking area TA2.

The tracking unit 312 registers, in the ID correspondence table 321, the position of the passenger P1 in association with the tracking ID relating to the passenger P1. In this instance, since the position of the passenger P1 calculated based on the tracking area TA1 is registered in the ID correspondence table 321, the position of the passenger P1 is updated, by the tracking unit 312 registering, in the ID correspondence table 321, the position of the passenger P1 calculated based on the tracking area TA2.

When setting the tracking area TA2, the tracking unit 312 may determine whether or not the face of the passenger P1 is captured in the tracking area TA2. In other words, the tracking unit 312 may perform the face detection for the tracking area TA2. When it is determined that the face of the passenger P1 is captured in the tracking area TA2, the tracking unit 312 generates a face image including the face area of the passenger P1. The tracking unit 312 transmits, to the face authentication unit 313, the generated face image in association with the tracking ID relating to the passenger P1. When it is determined that the face of the passenger P1 is not captured in the tracking area TA2, the tracking unit 312 may not generate the face image. Even when it is determined that the face of the passenger P1 is captured in the tracking area TA2, in a case where the tracking ID relating to the passenger P1 is associated with the authentication ID in the ID correspondence table 321 (i.e., in a case where the face authentication is successful), the tracking unit 312 may not generate the face image.

The face authentication unit 313 performs the face authentication processing, by using the face image transmitted from the tracking unit 312 and the face image registered in the face DB36. In a case where the face indicated by the face image transmitted from the tracking unit 312 corresponds to the face indicated by one of the face images registered in the face DB36 (in other words, in a case where the face authentication is successful), the face authentication unit 313 associates the authentication ID corresponding to one face image, with the tracking ID corresponding to the face image transmitted from the tracking unit 312, and registers it in the ID correspondence table 321. The face authentication unit 313 may register, in the ID correspondence table 321, an authentication time that is a time at which the face authentication processing is performed, in addition to the authentication ID. In a case where the authentication time is already registered in the ID correspondence table 321 (i.e., in a case where the face authentication was successful in the past), the face authentication unit 313 may update the authentication time registered in the ID correspondence table 321.

In a case where the face image indicating the face corresponding to the face indicated by the face image transmitted from the tracking unit 312 is not registered in the face DB36 (in other words, in a case where the face authentication is failed), the face authentication unit 313 may associate information indicating that there is no applicable person, with the tracking ID corresponding to the face image transmitted from the tracking unit 312, and may register it in the ID correspondence table 321.

The tracking unit 312 may identify the passenger P1 included in the image IMG3 by using the image IMG3 and the image IMG2. When the passenger P1 included in the image IMG3 is identified, the tracking unit 312 detects the head of the passenger P1. The tracking unit 312 sets the area including the head of the passenger P1, as a tracking area TA3, based on the detected head of the passenger P1. Since the passenger P1 included in the image IMG2 and the passenger P1 included in the image IMG3 are the same passenger, the tracking ID of the passenger P1 relating to the tracking area TA3 is the same as the tracking ID of the passenger P1 relating to the tracking area TA2. The tracking unit 312 calculates the position of the passenger P1, based on the tracking area TA3.

The tracking unit 312 registers, in the ID correspondence table 321, the position of the passenger P1 in association with the tracking ID relating to the passenger P1. In this instance, since the position of the passenger P1 calculated based on the tracking area TA2 is registered in the ID correspondence table 321, the position of the passenger P1 is updated, by the tracking unit 312 registering, in the ID correspondence table 321, the position of the passenger P1 calculated based on the tracking area TA3.

When setting the tracking area TA3, the tracking unit 312 may determine whether or not the face of the passenger P1 is captured in the tracking area TA3. In other words, the tracking unit 312 may perform the face detection for the tracking area TA3. When it is determined that the face of the passenger P1 is captured in the tracking area TA3, the tracking unit 312 generates a face image including the face area of the passenger P1. The tracking unit 312 transmits, to the face authentication unit 313, the generated face image in association with the tracking ID relating to the passenger P1. When it is determined that the face of the passenger P1 is not captured in the tracking area TA3, the tracking unit 312 may not generate the face image. Even when it is determined that the face of the passenger P1 is captured in the tracking area TA3, in a case where the tracking ID relating to the passenger P1 is associated with the authentication ID in the ID correspondence table 321 (i.e., in a case where the face authentication is already successful), the tracking unit 312 may not generate the face image.

The face authentication unit 313 performs the face authentication processing, by using the face image transmitted from the tracking unit 312 and the face image registered in the face DB36. In a case where the face indicated by the face image transmitted from the tracking unit 312 corresponds to the face indicated by one of the face images registered in the face DB36 (in other words, in a case where the face authentication is successful), the face authentication unit 313 associates the authentication ID corresponding to one face image, with the tracking ID corresponding to the face image transmitted from the tracking unit 312, and registers it in the ID correspondence table 321. The face authentication unit 313 may register, in the ID correspondence table 321, an authentication time that is a time at which the face authentication processing is performed, in addition to the authentication ID. In a case where the authentication time is already registered in the ID correspondence table 321 (i.e., in a case where the face authentication was successful in the past), the face authentication unit 313 may update the authentication time registered in the ID correspondence table 321.

In a case where the face image indicating the face corresponding to the face indicated by the face image transmitted from the tracking unit 312 is not registered in the face DB36 (in other words, in a case where the face authentication is failed), the face authentication unit 313 may associate information indicating that there is no applicable person, with the tracking ID corresponding to the face image transmitted from the tracking unit 312, and may register it in the ID correspondence table 321.

The tracking unit 312 and the face authentication unit 313 may repeat the above-described processing, until the passenger P1 passes through the authentication area RA1. The tracking unit 312 calculates the position of the passenger P1 as described above. That is, it can be said that the tracking unit 312 detects the position of the passenger P1. Therefore, the tracking unit 312 may be referred to as a position detection unit.

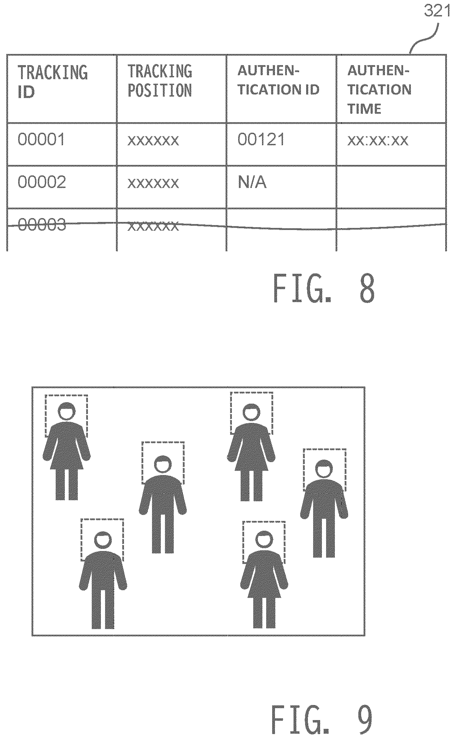

Referring now to FIG. 8, an example of the ID correspondence table 321 will be described. As illustrated in FIG. 8, in the ID correspondence table 321, the tracking ID, a tracking position (e.g., the position of the passenger P1), the authentication ID, and the authentication time may be associated with each other. In the ID correspondence table 321, a case where the tracking ID is associated with a specific authentication ID, indicates that the face image of a person corresponding to the passenger having a set tracking ID is registered in the face DB36. A case where the tracking ID is associated with a character string of "N/A", indicates that the face image of a person corresponding to the passenger having a set tracking ID is not registered in the face DB36. A case where the tracking ID is not associated with the authentication ID (i.e. a case where a field of the authentication ID is blank), indicates that the face authentication processing is not performed even once.

By the way, in some cases, it is hard for the tracking unit 312 to continue tracking the passenger P1, for example, as the head of the passenger P1 is hidden behind others. When the tracking of the passenger P1 is lost, the tracking unit 312 may perform the following processing. After losing the tracking of the passenger P1, the tracking unit 312 may determine whether or not a new passenger is detected from the first image acquired by the image acquisition unit 311 (i.e., the first image generated by the camera CAM1). The "new passenger" means a passenger whose tracking ID is not set.

When the new passenger is detected, the tracking unit 312 may determine whether or not the passenger P1 and the new passenger are the same person, by comparing the feature quantity of the tracking area relating to the passenger P1 (e.g., at least one of the tracking areas TA1, TA2 and TA3) with the feature quantity of the tracking area relating to the new passenger. When the passenger P1 and the new passenger are determined to be the same person, the tracking unit 312 may set the tracking ID relating to the passenger P1, for the new passenger. Consequently, the tracking unit 312 may track the passenger P1 again. Note that the feature quantity may be a feature quantity relating to the head of the passenger, a feature quantity relating to an upper body of the passenger, or a feature quantity relating to an entire body of the passenger. Accordingly, the tracking area may include the head of the passenger, may include the upper body of the passenger, or may include the entire body of the passenger. The feature quantity may be determined, for example, by a Person Re-Identification technique/technology.

The tracking unit 312 and the face authentication unit 313 may perform the tracking processing and the face authentication processing, on each of the plurality of passengers included in one first image generated by the camera CAM1. Here, the authentication area RA1 may be, for example, an area of 5 meters by 5 meters. A distance of 5 meters is long enough for 5 to 6 passengers to be permitted to pass side by side. In a case where the authentication area RA1 is an area of 5 meters by 5 meters, there may be 20 to 30 passengers in the authentication area RA1. Therefore, the display control apparatus 3 is configured to perform the tracking processing and the face authentication processing on the plurality of passengers, based on one first image generated by the camera CAM1 as illustrated in FIG. 9. Incidentally, a plurality of dotted rectangles in FIG. 9 represent the tracking area.

The tracking area (e.g., at least one of the tracking areas TA1, TA2 and TA3) may include a part other than the head of the passenger (e.g., a shoulder), in addition to the head of the passenger (e.g., the passenger P1) subjected to the tracking processing performed by the tracking unit 312. The tracking area may be set to include the upper body of the passenger, or may be set to include the entire body of the passenger.

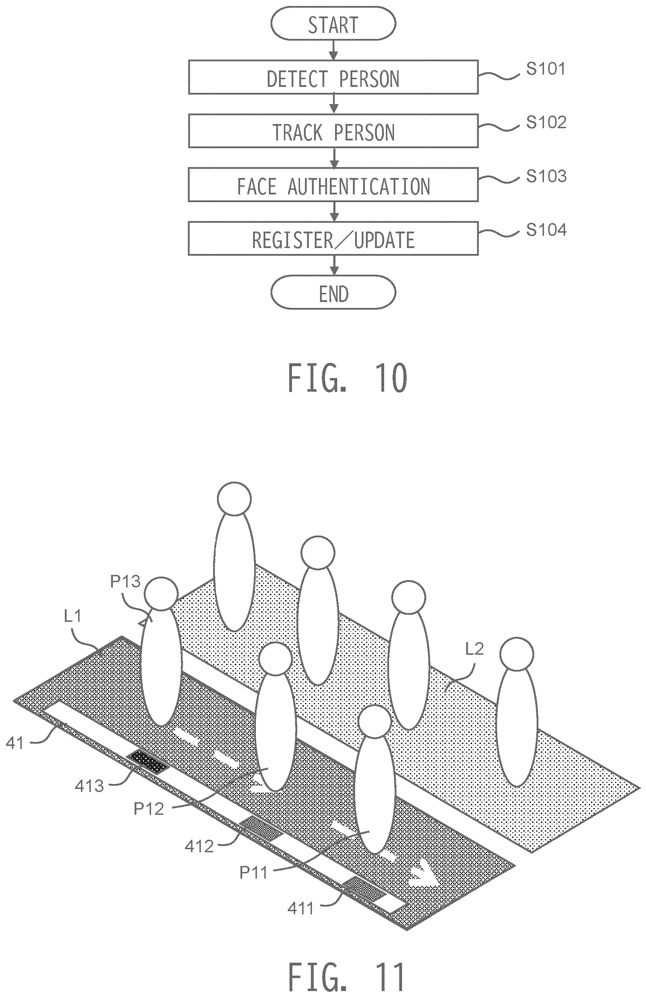

The operation of the tracking unit 312 and the face authentication unit 313 will be described with reference to a flowchart in FIG. 10. In FIG. 10, the tracking unit 312 detects one or more passengers (i.e., persons), from the first image acquired by the image acquisition unit 311 (i.e., the first image generated by the camera CAM1) (step S101). In the step S101, the tracking unit 312 may detect the head of the passenger. In the step S101, the tracking unit 312 may set the tracking area including the head of the passenger detected, based on the head of the passenger detected. In the step S101, the tracking unit 312 may perform the face detection on the detected one or more passengers.

The tracking unit 312 performs the tracking processing on at least one of the one or more passengers detected in the step S101, by using another first image acquired by the image acquisition unit 311 (step S102). In the step S102, the tracking unit 312 may perform the face detection on the detected one or more passengers. In at least one of the steps S101 and S102, in a case where the face of at least one of the one or more passengers is detected, the tracking unit 312 transmits the face image including the face area of the at least one passenger, to the face authentication unit 313.

The face authentication unit 313 performs the face authentication processing by using the face image transmitted from the tracking unit 312 (step S103). The face authentication unit 313 registers a result of the face authentication processing in the ID correspondence table 321, or updates the ID correspondence table 321 based on the result of the face authentication processing (step S104).

Next, the operation of the determination unit 314 and display control unit 315 of the arithmetic apparatus 31 will be described. Here, it is assumed that lanes L1 and L2 illustrated in FIG. 11 are provided in the vicinity of the face authentication gate apparatus 23 and the normal gate apparatus 24 of the boarding gate G1 illustrated in FIG. 4. The lane L1 is a lane through which passengers attempting to pass through the face authentication gate apparatus 23 pass. Therefore, it can be said that the lane L1 is a route with a flow of passengers heading toward the face authentication gate apparatus 23. The lane L2 is a lane through which passengers attempting to pass through the normal gate apparatus 24 pass. Therefore, it can be said that the lane L2 is a route with a flow of passengers heading toward the normal gate apparatus 24. In addition, the lanes L1 and L2 may be configured to be distinguishable from each other, by at least one of a floor mat and a partition pole. for example.

As illustrated in FIG. 11, a display apparatus 41 is disposed along a direction in which the lane L1 extends. The display apparatus 41 may be disposed along at least a part of the lane L1. As illustrated in FIG. 4, the display apparatus 41 may be provided between the face authentication gate apparatus 23 and the authentication area RA1. That is, the display apparatus 41 may be provided along a part between the face authentication gate apparatus 23 and the authentication area RA1, of the route with a flow of passengers heading toward the face authentication gate apparatus 23. The display apparatus 41 may include at least one of a light emitting diode (LED) light guiding plate, a liquid crystal panel, an organic electro luminescence (EL) panel, and a surface-emitting LED. The display apparatus 41 may be a single display apparatus, or may include a plurality of display apparatuses.

The determination unit 314 acquires the position of each passenger from the ID correspondence table 321. For example, the determination unit 314 may acquire a value of the tracking position of the ID correspondence table 321 illustrated in FIG. 8, as the position of each passenger. The determination unit 314 may identify the passenger(s) close to the display apparatus 41, based on the position of each passenger.

The determination unit 314 determines whether or not one or more passengers close to the display apparatus 41 are permitted to pass through the face authentication gate apparatus 23, based on the tracking IDs of the one or more passengers close to the display apparatus 41 and based on the ID correspondence table 321. In the ID correspondence table 321, in a case where the tracking ID of one passenger is associated with a specific authentication ID, the determination unit 314 may determine that "there is an applicable person" for the one passenger. In a case where the tracking ID of one passenger is associated with the character string of "N/A" in the ID-matching table 321, the determination unit 314 may determine that "there is no applicable person" for the one passenger. In a case where the tracking ID of one passenger is not associated with the authentication ID in the ID association table 321 (i.e., in a case where the field of the authentication ID is blank), the determination unit 314 may determine that the one passenger is "unauthenticated". The determination unit 314 may perform the determination based on the ID association table 321 a plurality of times, on a passenger who is determined to be unauthenticated. The determination unit 314 may determine that "there is no applicable person" for a passenger who is determined to be unauthenticated a predetermined number of times.

In a case where it is determined that "there is an applicable person" for the passenger, the determination unit 314 may determine whether or not the passenger is permitted to pass through the face authentication gate apparatus 23, based on the authentication ID of the passenger and the face DB 36. For example, the determination unit 314 may determine whether or not the boarding gate number (see FIG. 6) associated with the authentication ID in the face DB 36 matches the boarding gate number of the boarding gate at which the face authentication gate apparatus 23 is disposed. When the boarding gate number associated with the authentication ID does not match the boarding gate number of the boarding gate at which the face authentication gate apparatus 23 is disposed, the determination unit 314 may determine that the passenger is not permitted to pass through the face authentication gate apparatus 23. When it is determined that the boarding gate number associated with the authentication ID matches the boarding gate number of the boarding gate at which the face authentication gate apparatus 23 is disposed, the determination unit 314 may determine that the passenger is permitted to pass through the face authentication gate apparatus 23. Alternatively, when it is determined that the boarding gate number associated with the authentication ID matches the boarding gate number of the boarding gate at which the face authentication gate apparatus 23 is disposed, the determination unit 314 may compare the boarding start time associated with the authentication ID in the face DB 36 with the current time, and may determine whether or not the passenger is permitted to pass through the face authentication gate apparatus 23.

As illustrated in FIG. 3, the face authentication gate apparatus 23 is disposed at the boarding gate G1. In a case where the boarding gate of the aircraft that the passenger goes aboard is not the boarding gate G1, the determination unit 314 may determine that the passenger is not permitted to pass through the face authentication gate apparatus 23. In a case where the boarding gate of the aircraft that the passenger goes aboard is the boarding gate G1, but the current time is a second predetermined time (e.g., ten to several tens of minutes) or more before the boarding start time, the determination unit 314 may determine that the passenger is not permitted to pass through the face authentication gate apparatus 23. In a case where the boarding gate of the aircraft that the passenger goes aboard is the boarding gate G1 and the current time is not the second predetermined time or more before the boarding start time, the determination unit 314 may determine that the passenger is permitted to pass through the face authentication gate unit 23.

The determination unit 314 may output, as a determination result for one passenger, any one of (i) a first determination result indicating that there is an applicable person and the one passenger is permitted to pass through the face authentication gate unit 23, (ii) a second determination result indicating that there is an applicable person, but the one passenger is not permitted to pass through the face authentication gate unit 23, (iii) a third determination result indicating that there is no applicable person, and (iv) a fourth determination result indicating that the one passenger is unauthenticated.

Here, the first determination result is a determination result indicating that the passenger is permitted to pass through the face authentication gate apparatus 23. The second, third, and fourth determination results are determination results indicating that the passenger is not permitted to pass through the face authentication gate apparatus 23. The determination unit 314 transmits the determination result for the passenger and the position of the passenger, to the display control unit 315.

The display control apparatus 315 displays the determination result for the passenger, on the display apparatus 41. At this time, the display control apparatus 315 determines a display aspect of the determination result, based on the determination result for the passenger.

When the determination result for the passenger is the first determination result (i.e., there is an applicable person and the passenger is permitted to pass through the face authentication gate unit 23,), the display control apparatus 315 may determine to display a green figure (e.g., a rectangle), as a mark/sign indicating that the passenger is permitted to pass through the face authentication gate apparatus 23. When the determination result for the passenger is the second determination result (i.e., there is an applicable person, but the passenger is not permitted to pass through the face authentication gate unit 23), the display control apparatus 315 may determine to display a yellow figure (e.g., a rectangle), as a mark indicating that the passenger is not permitted to pass through the face authentication gate apparatus 23 at the moment, or that the gate is incorrect. When the determination result for the passenger is the third determination result (i.e., there is no applicable person), the display control unit 315 may determine to display a red figure (e.g., a rectangle), as a mark indicating that the passenger is not permitted to pass through the face authentication gate apparatus 23. When the determination result for the passenger is the fourth determination result (i.e., the passenger is unauthenticated), the display control unit 315 may determine to display a gray figure (e.g., a rectangle), as a mark indicating that passenger is unauthenticated. As described above, the display aspect for the first determination result, the display aspect for the second determination result, the display aspect for the third determination result, and the display aspect for the fourth determination result are different.

The result of the determination by the determination unit 314 is based on the result of the face authentication processing performed by the face authentication unit 313. Therefore, the result of the determination by the determination unit 314 may be rephrased as the result of the face authentication processing. For this reason, it can be said that the display control unit 315 determining the display aspect based on the determination result by the determination unit 314, is determining the display aspect based on the result of the face authentication.

The display control unit 315 determines a display position of the determination result for the passenger, on the display apparatus 41, based on the position of the passenger. The display control unit 315 may determine the display position of the determination result for the passenger to be in front of and near (e.g., one step in front of) the passenger. The display control unit 315 controls the display apparatus 41 such that the determination result for the passenger is displayed at the determined display position in the determined display aspect. With a change in the position of the passenger, the display control unit 315 changes the display position of the determination result for the passenger.

As illustrated in FIG. 11, the display control unit 315 may control the display apparatus 41 such that a mark 411 serving as a display aspect determined based on the determination result for a passenger P11, is displayed at a position in the display apparatus 41 determined based on the position of the passenger P11. The display control unit 315 may control the display apparatus 41 such that a mark 412 serving as a display aspect determined based on the determination result for a passenger P12, is displayed at a position in the display apparatus 41 determined based on the position of passenger P12. The display control unit 315 may control the display apparatus 41 such that a mark 413 serving as a display aspect based on the determination result for a passenger P13, is displayed at a position in the display apparatus 41 determined based on the position of the passenger P13. The display control unit 315 may control the display apparatus 41 such that the display position of each of the marks 411, 412 and 413 changes with a change in the position of each of the passengers P11, P12 and P13.

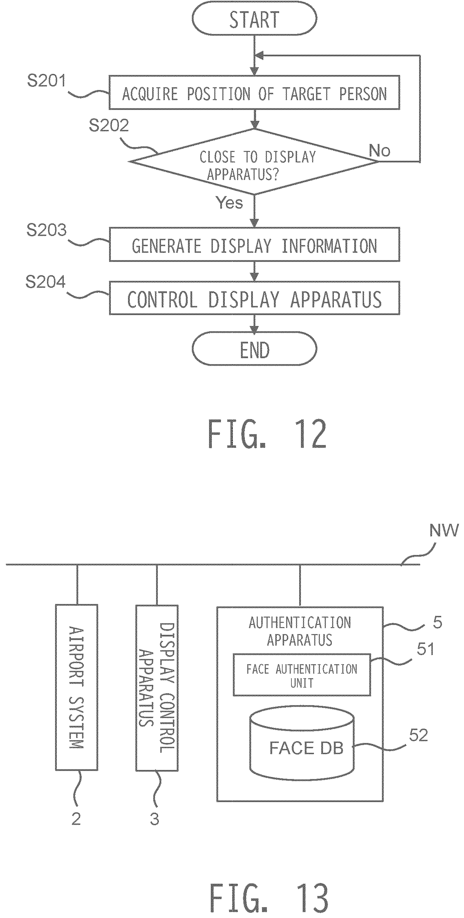

The operation of the determination unit 314 and the display control unit 315 will be described with reference to a flowchart in FIG. 12. In FIG. 12, the determination unit 314 acquires the position of the passenger serving as the target person, from the ID correspondence table 321 (step S201). The determination unit 314 determines whether or not the passenger is close to the display apparatus 41, based on the position of the passenger acquired in the step S201 (step S202).

When it is determined in the step S202 that the passenger is not close to the display apparatus 41 (the step S202: No), the determination unit 314 changes the target person (e.g., changes from one passenger to another) and performs the processing of the step S201. When it is determined in the step S202 that the passenger is close to the display apparatus 41 (the step S202: Yes), the determination unit 314 determines the display aspect of the determination result for that passenger and the display position of the determination result. The determination unit 314 may generate display information indicating the display aspect and the display position of the determination result for that passenger (step S203). The determination unit 314 transmits the display information to the display control unit 315. The display control unit 315 controls the display apparatus 41, based on the display information transmitted from the determination unit 314 (step S204).

In addition, the display control apparatus 3 may acquire at least a part of the plurality of pieces of boarding gate information registered in the gate DB 213 of the management server 21. The display control apparatus 3 may determine whether or not a face authentication gate apparatus (e.g., the face authentication gate apparatus 23) is disposed at the boarding gate (e.g., the boarding gate G1), based on the acquired boarding gate information. When it is determined that the face authentication gate apparatus is not disposed, the display control apparatus 3 may determine not to perform the aforementioned operation. When it is determined that the face authentication gate apparatus is disposed, the display control apparatus 3 may determine to perform the above-mentioned operation. Alternatively, when it is determined that the face authentication gate apparatus is disposed, the display control apparatus 3 may determine whether or not the disposed face authentication gate apparatus is in operation, based on the acquired boarding gate information. When it is determined that the disposed face authentication gate apparatus is in operation, the display control apparatus 3 may determine to perform the above-mentioned operation. When it is determined that the disposed face authentication gate apparatus is not in operation, the display control apparatus 3 may determine not to perform the above-mentioned operation. That is, the display control apparatus 3 may determine (or decide) whether or not to perform the above-mentioned operation, based on whether or not the face authentication gate apparatus is disposed, and/or whether or not the face authentication gate apparatus is in operation.

The operation of the display control apparatus 3 may be realized by the display control apparatus 3 reading a computer program recorded on a recording medium. In this case, it can be said that a computer program that allows the display control apparatus 3 to perform the above-mentioned operation is recorded on the recording medium.

### (Technical Effect)

As illustrated in FIG. 11, the display control apparatus 3 displays each of a plurality of determination results respectively corresponding to the plurality of passengers, on the display apparatus 41, in the display aspect based on the determination result. Therefore, the passenger himself, who is attempting to pass through the face authentication gate apparatus 23, can judge whether or not the passenger is permitted to pass through the face authentication gate apparatus 23, based on the display on the display apparatus 41. In addition, airport staff (e.g., at least one of a guide and a security guard) near the face authentication gate apparatus 23 can determine/recognize the person not being permitted to pass through the face authentication gate apparatus 23.

In a case where the passenger himself, who is attempting to pass through the face authentication gate apparatus 23, judges that the passenger is not permitted to pass through the face authentication gate apparatus 23, the passenger can be prevented from entering the face authentication gate apparatus 23. Furthermore, in a case where the airport staff (e.g., at least one of a guide and a security guard) can determine/recognize the person not being permitted to pass through the face authentication gate apparatus 23, the airport staff can guide the person not being permitted to pass through the face authentication gate apparatus 23, so as to enter the face authentication gate apparatus 23. Thus, according to the display control apparatus 3, it is possible to prevent the person not being permitted to pass through the face authentication gate apparatus 23, from entering the face authentication gate apparatus 23. Therefore, according to the display control apparatus 3, it is possible to prevent/control the reduction in the throughput of the face authentication gate apparatus 23.

In addition to the boarding gate at the airport, the display control apparatus 3 may be applied to at least one of a security gate at the airport (i.e., a gate disposed in a security inspection site at the airport) and an immigration gate, for example. In addition to the airport, the display control apparatus 3 may be applied to at least one of offices, railroad stations, theme parks, and event venues using the face authentication gate apparatus for at least one of entrance and exit, for example.

### (First Modification)

In the second example embodiment described above, the display control apparatus 3 (specifically, the face authentication unit 313) performs the face authentication processing. The display control apparatus 3, however, may not perform the face authentication processing. In this instance, the display control apparatus 3 may not include the face authentication unit 313 and the face DB36. In this instance, the face authentication processing may be performed by an authentication apparatus 5 differing from the display control apparatus 3. In such a case, as illustrated in FIG. 13, the display control apparatus 3 and the authentication apparatus 5 may be connected via the network NW. The display control apparatus 3 and the authentication apparatus 5 may constitute one system. The one system may be referred to as a display control system or an authentication system.

The authentication apparatus 5 includes a face authentication unit 51 and a face database 52 (hereinafter referred to as a "face DB52"). The face authentication unit 51 is configured to perform the face authentication processing. That is, the authentication apparatus 5 is an authentication apparatus having a face authentication function. The management server 21 of the airport system 2 may transmit, to the authentication apparatus 5, at least a part of the face image registered in the face DB 211, together with the authentication ID (i.e., the passenger identification information) added to the face image. In this instance, the management server 21 may transmit the gate identification information and the boarding start time to the authentication apparatus 5, in addition to the face image. The authentication apparatus 5 may register, in the face DB52, the face image transmitted from the management server 21. In addition to the face image, the authentication apparatus 5 may register, in the face DB52, the gate identification information and the boarding starting time.

The tracking unit 312 of the display control apparatus 3 may detect the passenger (e.g., the passenger P1) included in the image acquired by the image acquisition unit 311. The tracking unit 312 may set the tracking area including the head of the passenger detected. The tracking unit 312 may perform the face detection on the detected passenger. In a case where the face of the passenger is detected, the tracking unit 312 may transmit the face image including the face area of the passenger, to the authentication apparatus 5 via the communication apparatus 33.

The face authentication unit 51 of the authentication apparatus 5 may perform the face authentication processing, by using the face image transmitted from the display control apparatus 3 (specifically, the tracking unit 312) and the face DB52. The face authentication unit 51 may transmit information indicating a result of the face authentication processing, to the display control apparatus 3. The display control apparatus 3 may register, in the ID correspondence table 321, the result of the face authentication processing indicated by the information transmitted from the authentication apparatus 5 (specifically, the face authentication unit 51).

### (Second Modification)

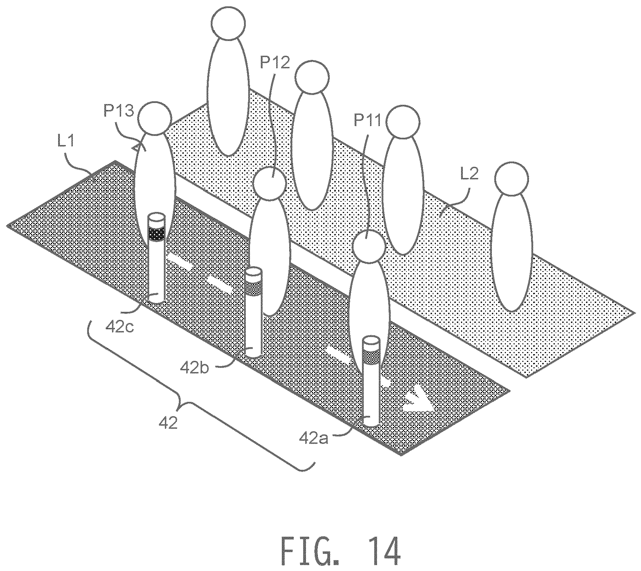

In the second example embodiment described above, the display control unit 315 of the display control apparatus 3 controls the display apparatus 41 disposed along the direction in which the lane L1 extends. In place of the display apparatus 41, a columnar member 42 with a display apparatus may be disposed in the lane L1. As illustrated in FIG. 14, the columnar member 42 may include columnar members 42a, 42b, and 42c. Since the display apparatus included in the columnar member 42 emits light, it may be referred to as a light emitting unit.

The display control unit 315 of the display control apparatus 3 may determine the columnar member (e.g., any one of the columnar members 42a, 42b, and 42c) that displays the determination result for the passenger, based on the position of the passenger. The display control unit 315 may control the display apparatus of the determined columnar member (e.g., any one of the columnar members 42a, 42b, and 42c) such that the display apparatus of the determined columnar member displays the determination result in the display aspect determined based on the determination result by the determination unit 314.

As a result, as illustrated in FIG. 14, the determination result for the passenger P11 may be displayed on the display apparatus of the columnar member 42a. The determination result for the passenger P12 may be displayed on the display apparatus of the columnar member 42b. The determination result for the passenger P13 may be displayed on the display apparatus of the columnar member 42c.

### (Third modification)

In place of the display apparatus 41, a projection apparatus configured to project an image may be disposed in at least one of the lane L1 and its surroundings. The display control unit 315 of the display control apparatus 3 may determine the display position for displaying the determination result for the passenger, based on the position of the passenger. The display control unit 315 may control the projection apparatus such that the determination result for the passenger is projected at the determined display position in the display aspect determined based on the determination result by the determination apparatus 314.

### (Fourth modification)

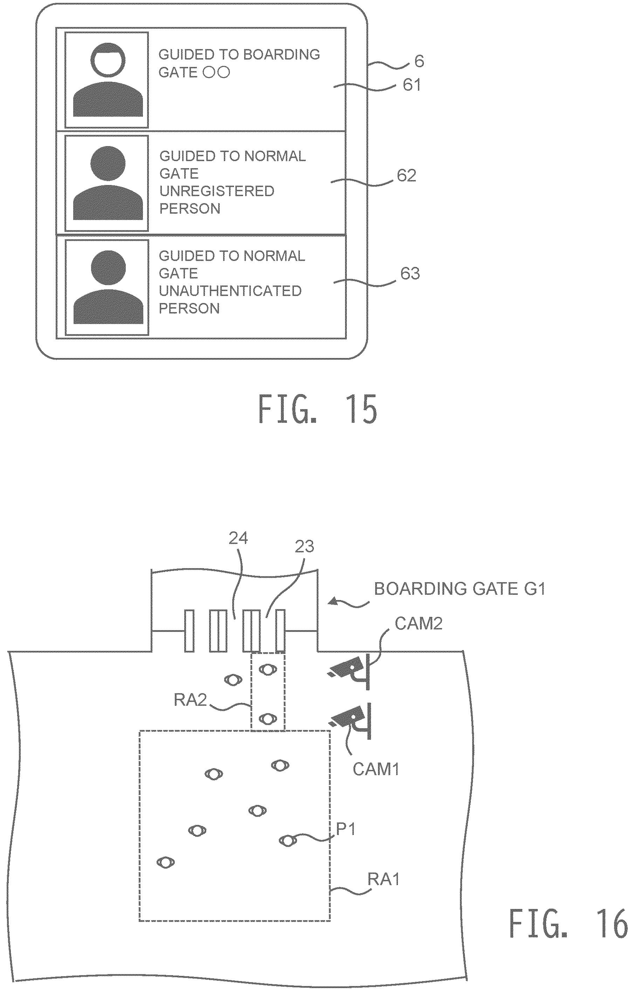

The display control apparatus 3 may be connected to a terminal apparatus 6 illustrated in FIG. 15, via the network NW. The terminal apparatus 6 may include any one of a tablet terminal, a smartphone, and a notebook PC (personal computer). The terminal apparatus 6 may be a terminal apparatus that is usable by the airport staff (e.g., at least one of a guide and a security guard).

The display control unit 315 of the display control apparatus 3 may control the terminal apparatus 6 to display information about the passenger for whom the determination result of the determination unit 314 is the second determination result, the third determination result, or the fourth determination result. That is, the display control unit 315 may control the terminal apparatus 6 to display information about the passenger not being permitted to pass through the face authentication gate apparatus 23 disposed at the boarding gate G1. As a result, an image as illustrated in FIG. 15 may be displayed on the terminal apparatus 6.

The display control unit 315 may control the terminal apparatus 6 to display a message indicative of guiding the passenger to a correct boarding gate and the face image, for example, for the passenger for whom the determination result by the determination unit 314 is the second determination result (see a display 61 in FIG. 15). The face image may be the face image registered in the face DB 36, or may be the face image extracted from the first image acquired by the image acquisition unit 311 (i.e. the first image generated by the camera CAM1).

The display control unit 315 may control the terminal apparatus 6 to display a message indicative of guiding the passenger to the normal gate apparatus 24, for example, for the passenger for whom the determination result by the determination unit 314 is the third determination result (see a display 62 in FIG. 15). In this case, the display control unit 315 may control the terminal apparatus 6 to display a message indicating that there is no applicable person ("unregistered person" in FIG. 15).

The display control unit 315 may control the terminal apparatus 6 to display a message indicative of guiding the passenger to the normal gate apparatus 24, for example, for the passenger for whom the determination result by the determination unit 314 is the fourth determination result (see a display 63 in FIG. 15). In this case, the display control unit 315 may control the terminal apparatus 6 to display a message indicating that the passenger is unauthenticated (i.e., that face authentication processing is not yet performed) ("unauthenticated person" in FIG. 15).

In parallel with the control of the terminal apparatus 6, the display control unit 315 may determine the display aspect of the determination result displayed on the display apparatus 41. In this case, the display control unit 315 may perform blinking display of the determination result displayed on the display apparatus 41, so as to indicate that the passenger displayed on the terminal apparatus 6 needs to be guided.

When the determination result for the passenger is the second determination result, the display control apparatus 315 may determine to blink and display a yellow rectangle indicating that the passenger is not permitted to pass through the face authentication gate apparatus 23 at the moment, or that the gate is incorrect. When the determination result for the passenger is the third determination result, the display control apparatus 315 may determine to blink and display a red rectangle indicating that the passenger is not permitted to pass through the face authentication gate apparatus 23. When the determination result for the passenger is the fourth determination result, the display control apparatus 315 may determine to blink and display a gray rectangle indicating that the passenger is unauthenticated.

The display control apparatus 315 may determine the display position of the determination result for the passenger on the display apparatus 41, based on the position of the passenger. The display control apparatus 315 may control the display apparatus 41 such that the determination result for the passenger is displayed at the determined display position in the determined display aspect.

In this way, it is possible to highlight the passenger not being permitted to pass through the face authentication gate apparatus 23 disposed at boarding gate G1. In addition, since information corresponding to the determination result for the passenger not being permitted to pass through the face authentication gate apparatus 23 is displayed on the terminal apparatus 6, the airport staff (e.g., at least one of a guide and a security guard) can provide appropriate support to the passenger not being permitted to pass through the face authentication gate apparatus 23.

### <Third Example Embodiment>

A display control apparatus according to a third example embodiment will be described with reference to FIG. 16. The following describes the display control apparatus, a display control method, and a recording medium according to the third example embodiment, by using the display control apparatus 3. The third example embodiment partially differs from the second example embodiment, in the operation of the image acquisition unit 311 and the tracking unit 312. The third example embodiment may be the same as the second example embodiment in the other points.

As illustrated in FIG. 16, in addition to the virtual authentication area RA1, a virtual authentication area RA2 is provided around the boarding gate G1 in which the face authentication gate apparatus 23 and the normal gate apparatus 24 are disposed. The authentication area RA2 is an area including at least a part of a line/queue (e.g., the lane L1 illustrated in FIG. 11) formed by passengers waiting to pass through the face authentication gate apparatus 23.

A camera CAM2 is configured to image/capture the authentication area RA2. The camera CAM2 may be connected to the display control apparatus 3 via the network NW. Furthermore, the camera CAM2 may not be disposed to include all of the authentication area RA2 in its angle of view. In other words, the camera CAM2 may be disposed to image/capture at least a part of the authentication area RA2. The camera CAM2 may be disposed at a position that does not interfere with the passage of passengers (e.g., at a position that is higher than the passengers' heads). As described later, an image captured by the camera CAM2 may be used for the face authentication processing. Therefore, the camera CAM2 may be a high-resolution camera, such as a 4K resolution camera. The camera CAM2 may not be connected to the display control apparatus 3 via the network NW. In this instance, the camera CAM2 may be connected to the display control apparatus 3 via a cable (e.g., a USB (Universal Serial Bus) cable).

The camera CAM2 may generate a second image that is an image including the authentication area RA2, by imaging the authentication area RA2. The second image may be an image corresponding to one frame of a video. The image acquisition unit 311 may acquire one or more second images generated by the camera CAM2 via the communication apparatus 33. The image acquisition unit 311 may store the acquired one or more second images in the storage apparatus 32.

The tracking unit 312 performs the tracking processing on one or more passengers passing through the authentication area RA2, by using one or more second images acquired by the image acquisition unit 311 (i.e., one or more second images generated by the camera CAM2).

As illustrated in FIG. 11, the lane L1 through which passengers attempting to pass through the face authentication gate apparatus 23 pass, and the lane L2 through which passengers attempting to pass through the normal gate apparatus 24 pass, are close to each other. Therefore, the second image may include the passenger attempting to pass through the normal gate apparatus 24, in addition to the passenger attempting to pass through the face authentication gate apparatus 23.

The tracking unit 312 may calculate the position of one or more passengers (e.g., position of feet) included in the second image. The tracking unit 312 may identify the passenger attempting to pass through the face authentication gate apparatus 23 (i.e., the passenger passing through the lane L1), who is included in the second image, based on the calculated position.

In a case where the lane L1 is closer than the lane L2 as seen from the camera CAM2, the tracking unit 312 may identify the passenger attempting to pass through the face authentication gate apparatus 23 (i.e., the passenger passing through the lane L1), based on a size of the head of each of the one or more passengers included in the second image.

The tracking unit 312 detects the head of the passenger attempting to pass through the face authentication gate apparatus 23, who is included in the second image. Based on the detected head of the passenger, the tracking unit 312 sets the tracking area including the head of the passenger. The tracking unit 312 may perform the face detection for the set tracking area. When the face of the passenger is detected, the tracking unit 312 may transmit the face image including the face area of the passenger to the face authentication unit 313. The face authentication unit 313 may perform the face authentication processing, by using the face image transmitted from the tracking unit 312 and the face image registered in the face DB 36.

### (Technical Effect)

In the third example embodiment, the face authentication processing is also performed on the passenger passing through the authentication area RA2 (i.e., the passenger waiting in the line formed by passengers waiting to pass through the face authentication gate apparatus 23), in addition to the authentication area RA1. Therefore, it is possible to increase the number of opportunities in which the face authentication processing is performed on the passenger attempting to pass through the face authentication gate apparatus 23. As a result, the number of passengers on which the face authentication processing is not performed even once (e.g., passengers determined to be unauthenticated by the determination unit 314) may be reduced.

### <Supplementary Notes>

With respect to the example embodiment described above, the following Supplementary Notes are further disclosed.

### (Supplementary Note 1)

A display control apparatus including:
an image acquisition unit that acquires an image including a predetermined area through which a person passes toward a face authentication gate apparatus passes; and
a display control unit that displays a result of face authentication performed by using the acquired image, before the person reaches the face authentication gate apparatus, wherein
the display control unit changes a display aspect, based on the result of the face authentication.

### (Supplementary Note 2)

The display control apparatus according to Supplementary Note 1, wherein
the result of the face authentication includes at least one of: a first result indicating that there is an applicable person and the person is permitted to pass through the face authentication gate apparatus; a second result indicating that there is an applicable person, but the person is not permitted to pass through the face authentication gate apparatus; and a third result indicating that there is no applicable person, and
a display aspect for the first result, a display aspect for the second result, a display aspect for the third result, are all different.

### (Supplementary Note 3)

The display control apparatus according to Supplementary Note 1 or 2, wherein
the display control apparatus includes a position detection unit that detects a position of the person, based on the acquired image, and
the display control unit changes a display position, based on the position of the person.

### (Supplementary Note 4)

The display control apparatus according to Supplementary Note 3, wherein
the display control unit causes a display apparatus provided along at least a part of a route with a flow of persons heading toward the face authentication gate apparatus, to display the result of the face authentication,
the display control unit detects a change in the position of the person, based on the position of the person, and
the display control unit causes the display apparatus to change the display position of the result of the face authentication, based on the change in the position of the person.

### (Supplementary Note 5)

The display control apparatus according to Supplementary Note 4, wherein the display control unit causes the display apparatus to display the result of the face authentication, at a position in front of and near the person, based on the position of the person.

### (Supplementary Note 6)

The display control apparatus according to Supplementary Note 4 or 5, wherein the display apparatus is provided along a part of the route between the face authentication gate apparatus and the predetermined area.

### (Supplementary Note 7)

The display control apparatus according to any one of Supplementary Notes 4 to 6, wherein the display apparatus includes one or more light emitting panels.

### (Supplementary Note 8)

The display control apparatus according to any one of claims Supplementary Notes 4 to 6, wherein the display apparatus includes one or more columnar members including light emitting units.

### (Supplementary Note 9)

The display control apparatus according to any one of Supplementary Notes 1 to 3, wherein the display control unit displays the result of the face authentication, by controlling a projection apparatus to project an image indicating the result of the face authentication.

### (Supplementary Note 10)

The display control apparatus according to any one of Supplementary Notes 1 to 9, wherein
the display aspect includes a display appearance and a display state, and
changing the display aspect includes changing at least one of the display appearance and the display state.

### (Supplementary Note 11)

The display control apparatus according to any one of Supplementary Notes 1 to 10, wherein
the display control apparatus includes a first determination unit that determines whether or not to guide the person to another gate apparatus that differs from the face authentication gate apparatus, based on the result of the face authentication, and
the display control unit changes the display aspect, based on a determination result by the first determination unit and the result of the face authentication.

### (Supplementary Note 12)

The display control apparatus according to any one of Supplementary Notes 1 to 11, wherein the display control apparatus includes a face authentication unit that performs face authentication by using the acquired image.

### (Supplementary Note 13)

The display control apparatus according to any one of Supplementary Notes 1 to 12, wherein
the acquired image includes a plurality of persons, and
the display control unit displays at least a part of a plurality of results respectively corresponding to the plurality of persons, of the face authentication performed by using the acquired image, before the plurality of persons reach the face authentication gate apparatus.

### (Supplementary Note 14)

The display control apparatus according to any one of Supplementary Notes 1 to 13, wherein the predetermined area includes a line formed by persons waiting to pass through the face authentication gate apparatus.

### (Supplementary Note 15)

The display control apparatus according to Supplementary Note 14, wherein the display control apparatus includes a second determination unit that determines whether or not the person is included in the line, based on a size of a head of the person included in the acquired image.

### (Supplementary Note 16)

The display control apparatus according to Supplementary Note 14, wherein the display control apparatus includes a second determination unit that determines whether or not the person is included in the line, based on a position of the person included in the acquired image.

### (Supplementary Note 17)

The display control apparatus according to any one of Supplementary Notes 14 to 16, wherein the display control unit displays a result of the face authentication corresponding to the person included in the line, out of results of the face authentication.

### (Supplementary Note 18)

The display control apparatus according to any one of Supplementary Notes 14 to 17, wherein the display control unit displays an indication of an undetermined result of the face authentication, for the person having an undetermined result of the face authentication, out of the persons included in the line.

### (Supplementary Note 19)

A display control method including:
acquiring an image including a predetermined area through which a person passes toward a face authentication gate apparatus passes;
displaying a result of face authentication performed by using the acquired image, before the person reaches the face authentication gate apparatus; and
changing a display aspect, based on the result of the face authentication.

### (Supplementary Note 20)

A recording medium on which a computer program that allows a computer to execute a display control method is recorded, the display control method including:
acquiring an image including a predetermined area through which a person passes toward a face authentication gate apparatus passes;
displaying a result of face authentication performed by using the acquired image, before the person reaches the face authentication gate apparatus; and
changing a display aspect, based on the result of the face authentication.

### (Supplementary Note 21)

A display control system including:
a face authentication gate apparatus;
an image acquisition unit that acquires an image including a predetermined area through which a person passes toward the face authentication gate apparatus passes;
an authentication unit that performs face authentication by using the acquired image; and
a display control unit that displays a result of the face authentication, before the person reaches the face authentication gate apparatus, wherein
the display control unit changes a display aspect, based on the result of the face authentication.

This disclosure is not limited to the example embodiments described above, but is allowed to be changed, if desired, without departing from the essence or spirit of this disclosure which can be read from the claims and the entire specification. A display control apparatus, a display control method, and a recording medium with such changes are also intended to be within the technical scope of the present disclosure.

### Description of Reference Codes

1, 3 Display control apparatus
2 Airport system
5 Authentication apparatus
6 Terminal apparatus
11, 311 Image acquisition unit
12, 315 Display control unit
21 Management server
22 Check-in terminal
23 Face authentication gate apparatus
24 Normal gate apparatus
31 Arithmetic apparatus
32 Storage apparatus
33 Communication apparatus
34 Input apparatus
35 Output apparatus
36, 52, 211, 232 Face database
51, 313 Face authentication unit
312 Tracking unit
314 Determination unit

## Claims

1. A display control apparatus comprising:
an image acquisition unit that acquires an image including a predetermined area through which a person passes toward a face authentication gate apparatus passes; and
a display control unit that displays a result of face authentication performed by using the acquired image, before the person reaches the face authentication gate apparatus, wherein
the display control unit changes a display aspect, based on the result of the face authentication.

2. The display control apparatus according to claim 1, wherein
the result of the face authentication includes at least one of: a first result indicating that there is an applicable person and the person is permitted to pass through the face authentication gate apparatus; a second result indicating that there is an applicable person, but the person is not permitted to pass through the face authentication gate apparatus; and a third result indicating that there is no applicable person, and
a display aspect for the first result, a display aspect for the second result, a display aspect for the third result, are all different.

3. The display control apparatus according to claim 1 or 2, wherein
the display control apparatus comprises a position detection unit that detects a position of the person, based on the acquired image, and
the display control unit changes a display position, based on the position of the person.

4. The display control apparatus according to claim 3, wherein
the display control unit causes a display apparatus provided along at least a part of a route with a flow of persons heading toward the face authentication gate apparatus, to display the result of the face authentication,
the display control unit detects a change in the position of the person, based on the position of the person, and
the display control unit causes the display apparatus to change the display position of the result of the face authentication, based on the change in the position of the person.

5. The display control apparatus according to claim 4, wherein the display control unit causes the display apparatus to display the result of the face authentication, at a position in front of and near the person, based on the position of the person.

6. The display control apparatus according to claim 4 or 5, wherein the display apparatus is provided along a part of the route between the face authentication gate apparatus and the predetermined area.

7. The display control apparatus according to any one of claims 4 to 6, wherein the display apparatus includes one or more light emitting panels.

8. The display control apparatus according to any one of claims 4 to 6, wherein the display apparatus includes one or more columnar members including light emitting units.

9. The display control apparatus according to any one of claims 1 to 3, wherein the display control unit displays the result of the face authentication, by controlling a projection apparatus to project an image indicating the result of the face authentication.

10. The display control apparatus according to any one of claims 1 to 9, wherein
the display aspect includes a display appearance and a display state, and
changing the display aspect includes changing at least one of the display appearance and the display state.

11. The display control apparatus according to any one of claims 1 to 10, wherein
the display control apparatus comprises a first determination unit that determines whether or not to guide the person to another gate apparatus that differs from the face authentication gate apparatus, based on the result of the face authentication, and
the display control unit changes the display aspect, based on a determination result by the first determination unit and the result of the face authentication.

12. The display control apparatus according to any one of claims 1 to 11, wherein the display control apparatus comprises a face authentication unit that performs face authentication by using the acquired image.

13. The display control apparatus according to any one of claims 1 to 12, wherein
the acquired image includes a plurality of persons, and
the display control unit displays at least a part of a plurality of results respectively corresponding to the plurality of persons, of the face authentication performed by using the acquired image, before the plurality of persons reach the face authentication gate apparatus.

14. The display control apparatus according to any one of claims 1 to 13, wherein the predetermined area includes a line formed by persons waiting to pass through the face authentication gate apparatus.

15. The display control apparatus according to claim 14, wherein the display control apparatus comprises a second determination unit that determines whether or not the person is included in the line, based on a size of a head of the person included in the acquired image.

16. The display control apparatus according to claim 14, wherein the display control apparatus comprises a second determination unit that determines whether or not the person is included in the line, based on a position of the person included in the acquired image.

17. The display control apparatus according to any one of claims 14 to 16, wherein the display control unit displays a result of the face authentication corresponding to the person included in the line, out of results of the face authentication.

18. The display control apparatus according to any one of claims 14 to 17, wherein the display control unit displays an indication of an undetermined result of the face authentication, for the person having an undetermined result of the face authentication, out of the persons included in the line.

19. A display control method comprising:
acquiring an image including a predetermined area through which a person passes toward a face authentication gate apparatus passes;
displaying a result of face authentication performed by using the acquired image, before the person reaches the face authentication gate apparatus; and
changing a display aspect, based on the result of the face authentication.

20. A recording medium on which a computer program that allows a computer to execute a display control method is recorded, the display control method including:
acquiring an image including a predetermined area through which a person passes toward a face authentication gate apparatus passes;
displaying a result of face authentication performed by using the acquired image, before the person reaches the face authentication gate apparatus; and
changing a display aspect, based on the result of the face authentication.

21. A display control system comprising:
a face authentication gate apparatus;
an image acquisition unit that acquires an image including a predetermined area through which a person passes toward the face authentication gate apparatus passes;
an authentication unit that performs face authentication by using the acquired image; and
a display control unit that displays a result of the face authentication, before the person reaches the face authentication gate apparatus, wherein
the display control unit changes a display aspect, based on the result of the face authentication.
